(19) Europäisches Patentamt / European Patent Office / Office européen des brevets

(11) **EP 3 253 832 B1**

(12) **EUROPÄISCHE PATENTSCHRIFT**

(45) Veröffentlichungstag und Bekanntmachung des Hinweises auf die Patenterteilung:
**22.05.2024 Patentblatt 2024/21**

(21) Anmeldenummer: **16703428.9**

(22) Anmeldetag: **25.01.2016**

(51) Internationale Patentklassifikation (IPC):
**H04N 1/00** (2006.01)   **B41N 3/00** (2006.01)
**B41M 3/14** (2006.01)   **C09D 11/40** (2014.01)
**C09D 11/037** (2014.01)   **B41M 3/00** (2006.01)
**B41M 5/00** (2006.01)

(52) Gemeinsame Patentklassifikation (CPC):
**C09D 11/037; B41M 3/14; C09D 11/322;**
**C09D 11/40;** B41M 3/008; B41M 5/0023; H04N 1/00

(86) Internationale Anmeldenummer:
**PCT/EP2016/000120**

(87) Internationale Veröffentlichungsnummer:
**WO 2016/124315 (11.08.2016 Gazette 2016/32)**

(54) **VERFAHREN ZUM DRUCKEN MEHRFARBIGER DRUCKBILDER**

METHOD FOR PRINTING MULTICOLOURED IMAGES

PROCÉDÉ POUR IMPRIMER DES IMAGES IMPRIMÉES MULTICOLORES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.02.2015 EP 15000343**
**18.12.2015 EP 15201374**

(43) Veröffentlichungstag der Anmeldung:
**13.12.2017 Patentblatt 2017/50**

(73) Patentinhaber: **Merck Patent GmbH**
**64293 Darmstadt (DE)**

(72) Erfinder:
• **CLAUTER, Peter**
**64319 Pfungstadt (DE)**
• **PLATZER, Cairon**
**64291 Darmstadt (DE)**
• **FRITSCHE, Kirsten**
**64283 Darmstadt (DE)**
• **WEINGART, Marc-Dieter**
**2540 Grenchen (CH)**
• **BOEGLI, Lorenz**
**3225 Muentschemier (CH)**
• **SCHMIDT, Christoph**
**65830 Kriftel (DE)**

(74) Vertreter: **Merck Patent Association**
**Merck Patent GmbH**
**64271 Darmstadt (DE)**

(56) Entgegenhaltungen:
EP-A1- 1 985 458   DE-A1-102005 037 095
US-A1- 2006 082 844

• ARMANINI L: "PRODUCING THREE-COLOR EFFECTS FORM INTERFERENCE PIGMENTS", PLASTICS ENGINEERING, SOCIETY OF PLASTICS ENGINEERS,INC. GREENWICH, CONN, US, Bd. 50, Nr. 12, 1. Dezember 1994 (1994-12-01), Seite 31/32,33, XP000521245, ISSN: 0091-9578

**Beschreibung**

Die vorliegende Erfindung bezieht sich auf ein Verfahren zum Drucken mehrfarbiger Druckbilder wie nachfolgend beschrieben und beansprucht, insbesondere mehrfarbiger Druckbilder in fotorealistischer Qualität, bei dem zur farbigen Pigmentierung der Druckfarben ausschließlich Interferenzpigmente verwendet werden, sowie auf mittels eines solchen Verfahrens hergestellt Druckbilder und deren Verwendung.

In konventionellen Druckverfahren wie Offsetdruck, Tiefdruck oder Siebdruck werden mehrfarbige Druckbilder durch nebeneinander und übereinander liegende Druckpunkte bzw. Druckflächen aus den für analoge Druckverfahren üblichen Primärfarben Cyan, Magenta, Yellow und wahlweise auch Schwarz (CMYK) auf in der Regel weißem oder hellem Bedruckstoff gedruckt. Jede der Druckfarben ist mit klassischen Absorptionsfarben pigmentiert, die sich in der visuellen Wahrnehmung subtraktiv mischen. Aus geeigneten Kombinationen der Primärfarben lassen sich so viele gewünschte Farbtöne des Farbkreises herstellen. Werden aber äquivalente Mengen an cyan, magenta und gelb pigmentierten Druckfarben auf einer einzigen Flächeneinheit übereinander aufgebracht, ergibt sich die vom Betrachter wahrgenommene Farbe schwarz. Darüber hinaus werden in der praktischen Druckanwendung schwarze Flächen oder Schriftzüge zusätzlich mit schwarz pigmentierter Druckfarbe verstärkt. Auch die modernen digitalen Verfahren wie der Inkjetdruck oder die tonerbasierte Elektrofotografie beruhen auf dem bewährten CMYK-System, da das Ausdrucken der Bilder nach wie vor an das Vorhandensein von Absorptionspigmenten oder -farbstoffen in den Druckfarben gebunden ist, obwohl die digitalen Aufnahmen selbst nicht im CMYK-System, sondern im RGB-Modus gespeichert werden.

Digitale Displays von Bildschirmen verschiedenster Art (LCD, LED, OLED, Plasma) verwenden Lichtstrahlen der Primärfarben Rot, Grün und Blau, die in verschiedenen Kombinationen untereinander zu Lichtpunkten kombiniert werden, die jede beliebige Farbstellung des Farbkreises annehmen können. Im Gegensatz zum CMYK-Farbsystem mischen sich farbige Lichtstrahlen im RGB-Modus in additiver Weise, d.h. übereinander liegende RGB-Lichtstrahlen adäquater Intensität mischen sich in der visuellen Wahrnehmung zu Weiß. Digitale Aufnahmen von Foto- oder Filmkameras erfolgen ebenfalls im RGB-Modus, so dass ein Abspielen dieser Aufnahmen auf digitalen Displays ohne größere Anpassungsprobleme möglich ist, während das Ausdrucken digitaler Aufnahmen in üblichen Druckern, beispielsweise in Inkjet-Druckern, ein computergestütztes Umwandeln von im RGB-Modus erhaltenen Bild-Daten in Daten für ein mechanisch druckbares Bild im CMYK-System erfordert.

Neben dem Einsatz von Absorptionspigmenten oder-farbstoffen sind in den letzten Jahren zusätzlich auch häufiger Interferenzpigmente mit verschiedenen optischen Eigenschaften (reine Interferenzfarben, Interferenzfarben kombiniert mit Absorptionsfarben, Glanz- und Glitzereffekte, optisch variable Effekte) in CMYK-gestützten Druckverfahren eingesetzt worden, die zur Hervorhebung von Details, Erzielung eines besonderen zusätzlichen Glanzes oder Glitters oder insgesamt zur optischen Verbesserung des Gesamteindruckes der Druckerzeugnisse verwendet wurden. Solche Druckerzeugnisse erlangen wegen ihrer besonderen Effekte oft eine besondere Aufmerksamkeit beim Betrachter, sind wegen des kombinierten Einsatzes von Absorptions- und Interferenzpigmenten und den damit verbundenen verschiedenen technischen Anforderungen an die Druckapparaturen und -verfahren jedoch nicht günstig in der Herstellung. Außerdem wird es immer schwieriger, Interferenzpigmente zu finden, die ganz besondere, auch in Fachkreisen Aufmerksamkeit erzeugende Effekte erzielen können.

Die optische Wirkung von Interferenzpigmenten beruht auf dem Brechzahlunterschied von Materialien, die in den Pigmenten in Form dünner Schichten übereinander angeordnet sind und eingestrahltes Licht abhängig von der Brechzahl der jeweiligen Schicht und des das Interferenzpigment umgebenden Mediums in unterschiedlicher Weise reflektieren, transmittieren und gegebenenfalls auch absorbieren. Durch Brechzahlunterschiede zwischen benachbarten Schichten kommt es bei den reflektierten Lichtstrahlen zu Gangunterschieden, so dass sich erstere überlagern und wellenlängenselektiv Licht bestimmter Wellenlängen verstärkt oder abgeschwächt wird. Die reflektierten Lichtstrahlen im auf diese Weise verstärkten sichtbaren Wellenlängenbereich werden vom Betrachter unter geeigneten Bedingungen als sichtbare Interferenzfarbe wahrgenommen. Sind alle Schichten der Interferenzpigmente aus transparenten, farblosen Materialien zusammengesetzt, sind lediglich Interferenzfarben, aber keine Körperfarben der Interferenzpigmente wahrnehmbar.

Optisch verhalten sich die Interferenzfarben von Interferenzpigmenten, die keine Absorptionsfarben aufweisen, wie farbige Lichtstrahlen, kombinieren sich also untereinander additiv. So sollte eine Schüttung aus transparenten, als Einzelpigmente farblosen Interferenzpigmenten, die in einem geeigneten Mischungsverhältnis aus roten, blauen und grünen Interferenzpigmenten (d.h. Interferenzpigmenten, die im Anwendungsmedium eine rote, grüne oder blaue Interferenzfarbe zeigen) vorliegt, theoretisch einen visuell wahrnehmbaren weißen Gesamteindruck ergeben, weicht jedoch in der Praxis häufig davon ab, so dass ein weißlicher, hellgrauer Farbton wahrgenommen wird.

Einzelne Interferenzpigmente bestehen in der Regel aus einem plättchenförmigen Trägermaterial und aus einer oder mehreren, mehr oder weniger transparenten Schichten, mit denen die plättchenförmigen Träger beschichtet sind. Die gleichmäßige Schichtdicke des Trägers und der einzelnen Schichten, die Homogenität der Zusammensetzung der einzelnen Schichten und die Oberflächenbeschaffenheit von Träger und einzelnen Schichten sowie die Größe und Größenverteilung der Pigmente bestimmen jedoch, unter anderem, inwieweit das optische Verhalten der jeweiligen Interferenzpigmente vom Idealverhalten der aktuell eingesetzten Materialien abweicht. Damit haben die Produktionsbedingungen von Interferenzpigmenten einen großen Einfluss auf deren optisches Verhalten. Daraus erklären sich auch die großen Unterschiede im optischen Verhalten, ausgedrückt durch beispielsweise Sättigung, Helligkeit oder Farbwinkel, von Interferenzpigmenten des formal gleichen Farbtons (z. b. rot) und eines formal gleichen Schichtaufbaus (z. B. Titandioxidschicht auf Glimmerplättchen) in Abhängigkeit vom Hersteller und vom eingesetzten Herstellungsverfahren, ja mitunter selbst in Abhängigkeit von der jeweiligen Charge.

Es ist deshalb in der Praxis bisher noch nicht gelungen analoge Druckverfahren zu entwickeln, die es gestatten, mehrfarbige Druckbilder zu erzeugen, deren Farbgebung ausschließlich auf der optischen Wirkung von reinen Interferenzfarben beruht, die durch Interferenzpigmente erzeugt werden.

Aus US 2006/0082844 A1 ist ein theoretisches Konzept bekannt, mit Hilfe dessen Interferenzpigmente zum Drucken von mehrfarbigen Druckbildern eingesetzt werden können sollen. Diese R'G'B'Y' benannte Konzept basiert auf dem Einsatz von vier Druckfarben, die jeweils rote, grüne, blaue und gelbe (goldene) Interferenzpigmente enthalten, wobei zur Erzeugung eines Druckpunktes (Pixels) vier sogenannte Bytes erforderlich sind. Dieses Konzept beruht auf der Erkenntnis bzw. Annahme, dass rote und grüne Interferenzpigmente sich, anders als rotes und grünes Licht, nicht zu gelb, sondern zu grau mischen. Um eine gelbe Farbe der Pixel zu erhalten, muss daher in diesem Konzept eine eigene gelbe bzw. goldene Farbspur erzeugt werden. Daraus ergibt sich auch, dass zur Erzeugung eines weißen Farbeindruckes eine rote, grüne, blaue und gelbe Druckfarbe erforderlich ist, die mit Interferenzpigmenten der jeweiligen Interferenzfarbe pigmentiert ist. Das hier beschriebene Konzept bleibt jedoch theoretisch. So sind weder praktisch verwertbaren Angaben über die einzusetzenden Interferenzpigmente enthalten noch kann aus der Offenbarung auf Druckmodalitäten geschlossen werden, die eine praktische Umsetzung dieses Konzepts ermöglichen würden.

DE102005037095A1, US2006/082844A1, EP1985458A1 und Armanni et al., "Producing three-Color Effects from Interference Pigments", Plastics Engineering, Society of Plastics Engineering, Inc., US, Bd. 50, Nr.1 2, 01.12.1994, Seite 31-33 offenbaren Interferenzpigmente oder Druckverfahren, offenabren aber keine Verfahren wie in der vorliegenden Anmeldung beansprucht oder legen diese nahe.

Aufgabe der vorliegenden Erfindung ist es, ein praktisch umsetzbares Druckverfahren zur Verfügung zu stellen, mit Hilfe dessen mehrfarbige attraktive Druckbilder auf variablen Substraten erzeugt werden können, wobei die Druckfarben mit Interferenzpigmenten farbig pigmentiert sind und wobei mit der kleinstmöglichen Anzahl an verschiedenen Druckfarben ein Druckbild erzeugt werden kann, welches Farbtöne im gesamten Farbraum aufweist, und wobei das Druckverfahren variabel an die üblichen analogen und digitalen Druckverfahren angepasst werden kann.

Eine weitere Aufgabe der Erfindung besteht darin, Druckerzeugnisse zur Verfügung zu stellen, welche mehrfarbige Druckbilder in bunten Farben und mit zusätzlichen besonderen optischen Effekten aufweisen und deren Verwendung aufzuzeigen.

Darüber hinaus besteht die Aufgabe der Erfindung darin, spezielle Interferenzpigmente und diese enthaltende Druckfarben zur Verfügung zu stellen, mit denen das genannte Druckverfahren bei höchster Druckqualität ausgeführt werden kann.

Die Aufgabe der vorliegenden Erfindung wird gelöst durch ein Verfahren zum Drucken mehrfarbiger Druckbilder im RGB-Modus, wobei drei farbige Druckfarben nacheinander in Form von Druckflächeneinheiten auf ein Substrat aufgebracht und verfestigt werden, dadurch gekennzeichnet, dass die Druckfarben jeweils aus einem Druckfarbenvehikel bestehen, welches ausschließlich mit Interferenzpigmenten farbig pigmentiert ist und eine Druckfarbe jeweils rote Interferenzpigmente, grüne Interferenzpigmente oder blaue Interferenzpigmente enthält, und wobei aus den drei farbigen Druckfarben nebeneinander und/oder übereinander liegende Druckflächeneinheiten gebildet werden, die ein mehrfarbiges Gesamtdruckbild ergeben, bei dem gelbe Druckflächeneinheiten durch aufeinander folgendes Aufbringen der Druckfarbe, die rote Interferenzpigmente enthält und der Druckfarbe, die grüne Interferenzpigmente enthält, gebildet werden, wobei das rote und das grüne Interferenzpigment jeweils aus einem plättchenförmigen transparenten Substrat und einer sich auf dem Substrat befindenden_Beschichtung besteht, wobei die Beschichtung zu mindestens 85 Gew.%, bezogen auf das Gewicht der Beschichtung, aus Titandioxid und/oder Titandioxidhydrat besteht, wobei das rote Interferenzpigment im CIELUV-Farbraumsystem einen Farbtonwinkel $h_{u'v'}$ im Bereich von 1 ° bis 7° und das grüne Interferenzpigment im CIELUV-Farbraumsystem einen Farbtonwinkel $h_{u'v'}$ im Bereich von 110° bis 120°aufweist,

und die Interferenzpigmente im CIELUV-Farbraumsystem folgende Sättigungswerte aufweisen:

| rote Interferenzpigmente | $S^*_{u'v'} \geq 0,65,$ |
|---|---|
| blaue Interferenzpigmente | $S^*_{u'v'} \geq 1,2$ und |
| grüne Interferenzpigmente | $S^*_{u'v'} \geq 0,45$ |

und die Interferenzpigmente im CIELUV-Farbraumsystem folgende

Chromawerte aufweisen:

| | |
|---|---|
| rote Interferenzpigmente | $C^*_{u'v'} \geq 33$ |
| blaue Interferenzpigmente | $C^*_{u'v'} \geq 50$ und |
| grüne Interferenzpigmente | $C^*_{u'v'} \geq 30,$ |

die Farbtonwinkel, Sättigungs- und Chromawerte jeweils bestimmt in einer separaten, vollflächigen Beschichtung aus der jeweiligen farbigen Druckfarbe auf einem schwarzen Substrat unter der Messbedingung 45°/as 25°.

Die Aufgabe der vorliegenden Erfindung wird ebenfalls gelöst durch Druckerzeugnisse, welche nach dem vorab beschriebenen Verfahren hergestellt sind, sowie deren Verwendung in dekorativen oder künstlerischen Produkten gelöst.

Das erfindungsgemäße Druckverfahren basiert auf dem an sich bekannten RGB-Modus, der aber, wie vorab beschrieben, bisher nur für die Kombination verschieden farbiger Lichtstrahlen in Displays oder ähnlichen technischen Vorrichtungen praktische Anwendung gefunden hat. Die nunmehrigen Erfinder können aber in überraschender Weise ein Druckverfahren zur Verfügung stellen, bei welchem das aufeinander folgende Drucken von lediglich drei ausschließlich mit Interferenzpigmenten farbig pigmentierten Druckfarben ausreicht um mehrfarbige Druckbilder mit Farbtönen über den gesamten Farbraum hinweg erhalten zu können.

Es konnte gefunden werden, dass ein solches Verfahren nur dann möglich ist, wenn gelbe Druckflächeneinheiten auf einem Substrat durch aufeinander folgendes Aufbringen einer Druckfarbe, die rote Interferenzpigmente enthält, und einer Druckfarbe, die grüne Interferenzpigmente enthält, auf dieselbe Druckflächeneinheit erhalten werden.

Als rote, grüne oder blaue Druckfarben werden nachfolgend Druckfarben verstanden, die ausschließlich mit Interferenzpigmenten farbig pigmentiert sind, die jeweils eine rote, grüne oder blaue Interferenzfarbe aufweisen.

Das Vorliegen der Interferenzfarbe wird dabei wie fachgemäß üblich auf der Basis der Reflexion von Interferenzpigmenten in einem transparenten, farblosen Medium, in der Regel einer Beschichtung auf einem Substrat, ermittelt.

In der vorliegenden Erfindung erfolgen alle Messungen an Hand der weiter unten beschriebenen Proben mit einem Multiangle Color Spectrophotometer MA 68/II der Firma X-Rite, Inc., USA. Zur Bestimmung der Interferenzfarbe der Interferenzpigmente wird hier die gerichtete Reflexion an der Probe und die spektral-aufgelöste Analyse des reflektierten Lichtes herangezogen. Die Messbedingungen liegen bei allen in der vorliegenden Beschreibung verwendeten Daten bei einem Beleuchtungswinkel von 45° und einem Betrachtungswinkel von as 25°.

In jedem Falle weisen die roten Interferenzpigmente eine verstärkte Reflexion im Wellenlängenbereich von 600 bis 750 nm, die grünen Interferenzpigmente eine verstärkte Reflexion im Wellenlängenbereich von 490 bis 550 nm und die blauen Interferenzpigmente eine verstärkte Reflexion im Wellenlängenbereich von 400 bis 490 nm auf. Je ausgeprägter und enger das entsprechende Reflexionsmaximum ausfällt, desto deutlicher ist eine monochrome und gesättigte Interferenzfarbe visuell wahrnehmbar.

Werden im allgemeinen eine rote Druckfarbe gemäß der vorherigen Definition und eine grüne Druckfarbe gemäß der vorherigen Definition übereinander auf dieselbe Flächeneinheit auf einem Substrat aufgebracht, kann die entsprechende Flächeneinheit, abhängig von der Konzentration der Interferenzpigmente in der Druckfarbe und vom Verhältnis der jeweils aufgebrachten Druckfarbenmenge pro Flächeneinheit verschiedene Mischfarben aufweisen, die vom rötlichen Grün bis zum grünlichen Rot reichen und bei einem bestimmten Mischungsverhältnis und bei bestimmten Rot- oder Grüntönen auch Graustufen darstellen können.

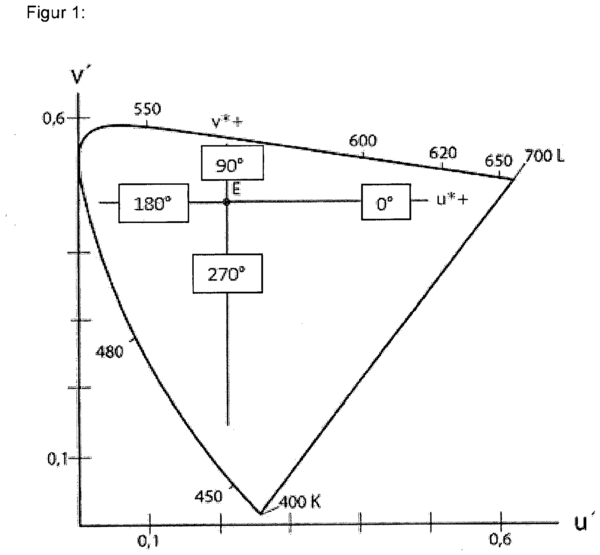

Die nunmehrigen Erfinder haben gefunden, dass eine rote Druckfarbe und eine grüne Druckfarbe gemäß der vorab erfolgten Definition, nacheinander auf derselben Flächeneinheit verdruckt, einen gelben Farbton erzeugen können, wenn für die in den Druckfarben enthaltenen roten und grünen Interferenzpigmente bestimmte Bedingungen eingehalten werden. So ist es gemäß der vorliegenden Erfindung erforderlich, dass die roten Interferenzpigmente in der roten Druckfarbe im CIELUV(1976)-Farbraumsystem einen Farbtonwinkel $h_{u'v'}$ im Bereich von 1° bis 7°, und die grünen Interferenzpigmente in der grünen Druckfarbe einen Farbtonwinkel $h_{u'v'}$ im Bereich von 110° bis 120°, aufweisen, wobei der Farbtonwinkel der roten Interferenzpigmente nicht 0° ist, und der Farbtonwinkel der grünen Interferenzpigmente nicht 180° beträgt (siehe Figur 1; Farbtonwinkel bestimmt in einer jeweils separaten, vollflächigen Beschichtung aus der jeweiligen farbigen Druckfarbe auf einem schwarzen Substrat im CIELUV(1976)-Farbraumsystem bei 45°/as 25°, genauere Beschreibung siehe unten).

(Zur Bedeutung und Bestimmung des Farbtonwinkels siehe: Richter, M., Einführung in die Farbmetrik, 2. Auflage, de Gruyter, 1981, pp.118-122.) Der Abstand des Farbtonwinkels $h_{u'v'}$ des grünen Interferenzpigmentes zum Farbtonwinkel $h_{u'v'}$ des blauen Interferenzpigmentes sowie der Abstand des Farbtonwinkels $h_{u'v'}$ des blauen Interferenzpigmentes zum Farbtonwinkel $h_{u'v'}$ des roten Interferenzpigmentes sollte vorteilhafterweise jeweils im Bereich von 90 bis 160 Winkelgrad, vorzugsweise von 105 bis 140 Winkelgrad und insbesondere im Bereich von 110 bis 130 Winkelgrad liegen.

Unter Einhaltung dieser Bedingungen, insbesondere bezüglich des roten und grünen Interferenzpigmentes, ist es möglich, dass eine Flächeneinheit auf einem Substrat, welche nacheinander überlappend mit einer roten Druckfarbe und einer grünen Druckfarbe entsprechend der vorherigen Definition bedruckt wird, unter bestimmten Mengenverhältnissen der Druckfarben und bei definiertem Pigmentgehalt überhaupt einen visuell wahrnehmbaren gelben Farbton aufweisen kann. Dabei kann jede der aufgebrachten Druckschichten separat verfestigt werden oder der Verbund aus einer Druckschicht aus roter Druckfarbe und einer die erste Schicht überlappenden Druckschicht aus grüner Druckfarbe wird gemeinsam verfestigt.

Der Farbtonwinkel $h_{u'v'}$ der blauen Interferenzpigmente kann vergleichsweise frei gewählt werden, richtet sich jedoch vorzugsweise nach den vorab angegebenen Bereichen für die Abstände der Farbtonwinkel und liegt vorteilhafterweise im Bereich von 210° bis 280°.

Die Einhaltung der vorab beschriebenen Bedingungen insbesondere für die roten und grünen Interferenzpigmente ermöglicht es, dass ein Druckverfahren mit lediglich drei mit Interferenzpigmenten farbig pigmentierten Druckfarben (RGB) ausreicht, um mehrfarbige Druckbilder in der farbigen Vielfalt des gesamten Farbraumes zu erhalten. Dabei hängt die Farbintensität und die Brillanz der Druckbilder selbstverständlich von weiteren Bedingungen ab.

Erfindungsgemäß vorteilhaft ist daher eine Ausführungsform der vorliegenden Erfindung, bei der die jeweils eingesetzten Interferenzpigmente eine möglichst hohe Farbsättigung aufweisen, also besonders farbstark sind.

Um die Farbsättigung von Interferenzpigmenten zu beurteilen, eignet sich insbesondere das CIELUV-Farbraumsystem (1976), welches normalerweise für die Messung von Lichtfarben eingesetzt wird, insgesamt zur Beurteilung von Interferenzpigmenten jedoch weniger verbreitet ist als das häufig benutzte CIELAB-Farbraumsystem. Allerdings lassen sich die mit den üblichen Meßgeräten erhaltenen Farbwerte jeweils von dem einen in das andere Farbraumsystem umrechnen (siehe: Wyszecki G., Stiles W.S., Color Science, Concepts and methods, Quantitative Data and Formulae, Wiley, 2000, pp. 158-169*). Die Sättigung $S^*_{u'v'}$ im CIELUV-Farbraumsystem beschreibt die Entfernung des jeweiligen Farborts vom Unbuntpunkt in der Farbtafel. Diese reale Farbsättigung eines Interferenzpigmentes kann mittels der CIELUV-Farbwerte deutlich realistischer eingeschätzt werden als mittels des im CIELAB-Farbraumsystem bestimmten Chroma-Wertes, weil in ersterem der Einfluss der Helligkeit eliminiert ist, während sich im CIELAB-System lediglich ChromaWerte ermitteln lassen, die sich aus der Farbsättigung und der Helligkeit zusammensetzen.

Die Sättigung und andere anwendungsbezogene Farbeigenschaften von Interferenzpigmenten, gleich in welchem Farbraumsystem, lassen sich nur in einer Anwendungsform bestimmen, nicht jedoch am Einzelpartikel. Aus diesem Grunde beziehen sich alle in der vorliegenden Erfindung herangezogenen Farbdaten auf eine Beschichtung, die aus einem handelsüblichen flüssigen Druckfarbenvehikel und dem jeweiligen Interferenzpigment in einer Konzentration von 23 Gew.%, bezogen auf die fertige Beschichtungszusammensetzung, besteht und vollflächig auf ein schwarzes Substrat im Tiefdruck aufgebracht und verfestigt wird. (30 Gewichtsteile Pigment und 70 Gewichtsteile Tiefdruckbinder (z.B. Siegwerk 5036 Verschnitt NC TOF) werden innig vermischt und vor dem Verdrucken wird die Viskosität mit 30 Gewichtsteilen einer Mischung aus Ethanol/Ethylacetat (3:1) druckfertig eingestellt. Die Druckfarbe, enthaltend die jeweiligen roten, blauen oder grünen Interferenzpigmente, wird anschließend jeweils einzeln auf ein schwarz gefärbtes Substrat (z.B. Fedrigoni SPX Black) vollflächig mit einem Tiefdruckgerät (60L/cm, 120°, E-Gravur) aufgebracht und getrocknet. Das erhaltene bedruckte Subtrat wird in Stücke geeigneter Größe geteilt und optisch vermessen, s.u.)

Die Messung der Farbdaten erfolgt mit einem Multiangle Color Spectrophotometer MA 68/II der Firma X-Rite, Inc., USA. Aus den erhaltenen spektralen Daten werden die jeweiligen Farbkoordinaten L*u',v' für das CIELUV(1976)-Farbraumsystem für gegebene Randbedingungen (2° oder 10° Normalbeobachter sowie D65 Lichtquelle) berechnet.

Es hat sich erfindungsgemäß als besonders vorteilhaft herausgestellt, wenn die in den Druckfarben eingesetzten Interferenzpigmente in einer jeweils separaten, vollflächigen Beschichtung aus der jeweiligen farbigen Druckfarbe auf einem schwarzen Substrat im CIELUV-Farbraumsystem folgende Sättigungswerte aufweisen:

| | |
|---|---|
| Rote Interferenzpigmente | $S^*_{u'v'} \geq 0{,}65$ |
| Blaue Interferenzpigmente | $S^*_{u'v'} \geq 1{,}2$ und |
| Grüne Interferenzpigmente | $S^*_{u'v'} \geq 0{,}45$ |

bei 45°/as 25°. Dabei stellt 45° den Beleuchtungswinkel und as 25° den Beobachtungswinkel im Abstand zum Glanzwinkel dar.

Da die jeweiligen Sättigungswerte, unter anderem bedingt durch die natürliche Begrenzung des CIELUV-Farbraumes, natürliche Obergrenzen aufweisen, ist eine Nennung der Maximalwerte für die Sättigung hier nicht angezeigt, vielmehr sind alle Interferenzpigmente mit roter, blauer oder grüner Interferenzfarbe geeignet, deren CIELUV-Sättigungswerte mindestens den oben angegebenen Untergrenzen entsprechen.

Darüber hinaus spielt jedoch auch die Buntheit (Chroma) der jeweils eingesetzten Interferenzpigmente eine wichtige Rolle, wenn es um qualitativ hochwertige Druckergebnisse mit intensiver Farbgebung geht. So ist es für den qualitativen Erfolg des erfindungsgemäßen Druckverfahrens von besonderem Vorteil, wenn die in den Druckfarben eingesetzten Interferenzpigmente in einer jeweils separaten, vollflächigen Beschichtung aus der jeweiligen farbigen Druckfarbe auf einem schwarzen Substrat im CIELUV-Farbraumsystem folgende Chromawerte aufweisen:

| | |
|---|---|
| Rote Interferenzpigmente | $C^*_{u'v'} \geq 33$ |
| Blaue Interferenzpigmente | $C^*_{u'v'} \geq 50$ und |
| Grüne Interferenzpigmente | $C^*_{u'v'} \geq 30$ |

bei 45°/as 25°. Dabei stellt 45° den Beleuchtungswinkel und as 25° den Beobachtungswinkel im Abstand zum Glanzwinkel dar.

Auch die jeweiligen Chromawerte unterliegen nach oben hin keiner Beschränkung. Vielmehr können alle roten, blauen und grünen Interferenzpigmente eingesetzt werden, deren Chroma mindestens die oben angegebenen Werte aufweist und ansonsten jeden Wert bis hin zum höchsten erreichbaren Wert für Interferenzpigmente aufweisen kann.

Der Chroma-Wert im CIELUV(1976)-Farbraumsystem ergibt sich aus dem Produkt von Helligkeit L* und Sättigung $S^*_{u'v'}$.

$$C^*_{u'v'} = L^* S^*_{u'v'}$$

Die für das erfindungsgemäße Druckverfahren eingesetzten Interferenzpigmente zeigen im Anwendungsmedium entweder eine rote oder eine blaue oder eine grüne Interferenzfarbe. Sie bestehen aus plättchenförmigen Trägern, die mit einer oder mehreren Schichten aus Materialien beschichtet sind, die eine von Trägermaterial verschiedene Brechzahl aufweisen, was zumindest auf das Material der ersten auf dem Träger befindlichen Schicht zutrifft, und, sofern mehrere Schichten auf dem Träger vorhanden sind, voneinander verschiedene Brechzahlen zwischen direkt aufeinander liegenden Schichten aufweisen.

Am Markt und in der Fachliteratur sind viele Interferenzpigmente bekannt, die diese Bedingungen erfüllen. Viele dieser bekannten Interferenzpigmente zeigen, bedingt durch die stoffliche Zusammensetzung ihres Trägers oder ihrer auf dem Träger befindlichen Schichten, neben Interferenzeffekten auch Absorptionseffekte. Das trifft beispielsweise auf Interferenzpigmente zu, deren Träger aus Metallen, aus Graphit oder plättchenförmigem Eisenoxid besteht, aber gilt auch für alle Interferenzpigmente, deren Schichtaufbau absorbierende Materialien wie Eisenoxide, Chromoxid oder Kobaltoxid, oder Mischoxide wie Pseudobrookit enthält. Diese Interferenzpigmente zeigen oft Interferenzfarben, die als sehr farbintensiv wahrgenommen werden, sind aber für den Einsatz im erfindungsgemäßen Verfahren nur unter der Bedingung geeignet, dass die Interferenzpigmente zumindest semitransparent sind und dass Druckbilder erzeugt werden sollen, die gezielte "Farbstiche" in den inhärenten Absorptionsfarben der Interferenzpigmente aufweisen und die in ihrem optischen Erscheinungsbild von Druckbildern abweichen, die fotorealistische optische Effekte erzielen.

Um die genannten fotorealistischen optischen Effekte im resultierenden Druckbild erhalten zu können ist es daher notwendig und erfindungsgemäß bevorzugt, wenn die roten, blauen und grünen Interferenzpigmente jeweils aus transparenten, farblosen, plättchenförmigen Trägern bestehen, die mit einer oder mehreren Schichten aus transparenten, farblosen Materialien beschichtet sind.

Die Interferenzpigmente selbst liegen auch plättchenförmig vor. Als plättchenförmig werden Pigmente oder Trägermaterialien bezeichnet, wenn ihre äußere Form einem flachen Gebilde entspricht, welches mit seiner Ober- und Unterseite zwei annähernd parallel zueinander stehende Oberflächen aufweist, deren Ausdehnung in Länge und Breite die größte Ausdehnung des Pigmentes oder des Trägermaterials darstellt. Der Abstand zwischen den genannten Oberflächen, der die Dicke des Plättchens darstellt, weist dagegen eine geringere Ausdehnung auf.

Bevorzugt weisen die erfindungsgemäß eingesetzten Interferenzpigmente einen plättchenförmigen Träger auf, welcher mindestens eine Beschichtung aus einem Metalloxid, Metalloxidhydrat oder Gemischen aus diesen umfasst.

Der plättchenförmige, transparente, farblose Träger besteht vorzugsweise aus natürlichem oder synthetischem Glimmer, Kaolin oder einem anderen Schichtsilikat, aus Glas, Calcium-Aluminium-Borosilikat, $SiO_2$, $TiO_2$ oder $Al_2O_3$.

Besonders bevorzugt sind plättchenförmige Träger aus Glimmer, Glas, Calcium-Aluminium-Borosilikat oder $SiO_2$, insbesondere jedoch plättchenförmige Träger aus natürlichem oder synthetischem Glimmer.

Bevorzugt besteht eine auf dem Träger aufgebrachte Beschichtung aus einem Metalloxid, einem Metalloxidhydrat oder aus einem Gemisch aus diesen, wobei die Beschichtung zu mindestens 85 Gew.%, bezogen auf das Gewicht der Beschichtung, aus Titandioxid und/oder Titandioxidhydrat besteht. Liegen mehrere Schichten auf dem Substrat vor, setzt sich jede dieser Schichten bevorzugt ebenfalls aus einem Metalloxid, einem Metalloxidhydrat oder einem Gemisch aus diesen zusammen. Dabei ist das Material für die einzelnen Schichten so ausgewählt, dass sich diese in ihrer jeweiligen Brechzahl voneinander unterscheiden, was insbesondere auf direkt aufeinander angeordnete Schichten beziehungsweise auf das Material der Trägers und der ersten darauf befindlichen Schicht zutrifft. Bevorzugte farblose Metalloxide sind ausgewählt aus $TiO_2$, $SnO_2$, $SiO_2$, $Al_2O_3$, $ZrO_2$ und $ZnO$. Insbesondere bestehen farblose Metalloxid-

schichten aus $TiO_2$, $SnO_2$ oder $SiO_2$ und ganz besonders bevorzugt aus $TiO_2$ und $SnO_2$. Bevorzugt sind auch die Oxidhydrate der Elemente Ti, Sn, Si, Al, Zr und Zn, insbesondere die von Ti, Sn und Si sowie jeweils deren Mischungen mit den entsprechenden Metalloxiden. Oxide und Oxidhydrate von Ti und Sn können in einer einzigen Schicht oder in voneinander getrennten Schichten auf dem plättchenförmigen Träger vorliegen.

Die vorab genannten Materialkombinationen werden bevorzugt mit plättchenförmigen Trägermaterialien aus Glimmer, Glas, Calcium-Aluminium-Borosilikat oder $SiO_2$, insbesondere jedoch mit plättchenförmigen Trägern aus natürlichem oder synthetischem Glimmer eingesetzt.

Insbesondere bevorzugt werden erfindungsgemäß Interferenzpigmente eingesetzt, die auf synthetischen oder natürlichen Glimmerplättchen basieren und in ihrer Beschichtung lediglich Metalloxide und/oder Metalloxidhydrate von Ti und Sn aufweisen. Da Zinnoxid, wie allgemein bekannt, eine Rutilisierung von Titandioxid indiziert, liegt Titandioxid in solchen Schichtsystemen überwiegend in der Rutilmodifikation vor.

Die erfindungsgemäß eingesetzten roten, blauen und grünen Interferenzpigmente können dabei aus jeweils den gleichen Materialien aufgebaut sein und sich lediglich in der Schichtdicke der Schichten in der Beschichtung unterscheiden, wodurch die verschiedenen Interferenzfarben erhalten werden. Ein solcher, materialseitig gleicher Aufbau der erfindungsgemäß eingesetzten roten, blauen und grünen Interferenzpigmente ist auch bevorzugt. Selbstverständlich können aber auch Interferenzpigmente eingesetzt werden, die einen von Interferenzfarbe zu Interferenzfarbe materialseitig verschiedenen Aufbau zeigen, ansonsten aber die coloristischen Parameter der vorliegenden Erfindung erfüllen.

Für ein qualitativ hochwertiges Druckbild als Ergebnis des erfindungsgemäßen Druckverfahrens ist es von großer Bedeutung, dass mittels der Interferenzpigmente eine hohe Flächenabdeckung der Druckflächeneinheiten erfolgt, wenn diese mit den einzelnen farbigen Druckfarben bedruckt werden. Ein Parameter, mit Hilfe dessen eine hohe Flächenabdeckung eingestellt werden kann, ist die Partikelgröße der Interferenzpigmente.

Erfindungsgemäß liegt die Partikelgröße der erfindungsgemäß eingesetzten roten, grünen und blauen Interferenzpigmente im Bereich von 5 bis 45 $\mu$m mit einem $d_{90}$-Wert von <40 $\mu$m, insbesondere von <35 $\mu$m. Vorzugsweise werden Interferenzpigmente eingesetzt, deren $d_{50}$-Wert bei <20 $\mu$m, insbesondere bei <18 $\mu$m, und deren $d_{10}$-Wert vorzugsweise bei <12 $\mu$m liegt. Dabei bezieht sich die Partikelgröße jeweils auf die Hauptachse der Pigmente, d.h. die längste Ausdehnung des jeweiligen Pigmentpartikels.

Um für die Partikelgröße absolute Werte zu erhalten, die auf einer breiten statistischen Auswertung beruhen, beruhen die Angaben der Partikelgröße in der vorliegenden Erfindung auf einer Einzelauswertung im Lichtmikroskop mit automatisierter Bildanalyse. Da Interferenzpigmente eine Plättchenform aufweisen und mit ihrer Hauptfläche parallel zur Lichtquelle orientiert werden können, kann mit diesem Verfahren jeweils die konkrete Partikeloberfläche und die Formfaktoren vermessen werden. Die anzahlgewichtete Verteilung der Hauptachsenlänge wird über die $d_{10}$, $d_{50}$, $d_{90}$ und gegebenenfalls $d_{95}$-Werte ausgedrückt (entspricht dem Prozentsatz an Partikeln, die kleiner sind als der angegebene Wert). Es werden jeweils mehr als 1000 Pigmentpartikel ausgewertet. Die Auswertung erfolgt gemäß [a] ISO 13322-1:2014 -Particle size analysis-Image analysis methods-Part 1: Static image analysis methods; [b] ASTM E1617 -09(2014) Standard Practice for reporting Particle size characterization data; bzw. [c] Powder sampling and Particle size determination, T. Allen, Elsevier 2003.

Die mittels dieser Einzelauswertung im Lichtmikroskop erhaltenen Werte ermöglichen eine äußerst realistische Übersicht über die Partikelgrößen und die Partikelgrößenverteilung von plättchenförmigen Pigmenten. Es können jedoch auch andere gängige Verfahren zur Ermittlung der Partikelgröße von Interferenzpigmenten eingesetzt werden.

Die erfindungsgemäß eingesetzten Interferenzpigmente besitzen in der Regel ein Aspektverhältnis (Verhältnis des mittleren Durchmessers zur mittleren Teilchendicke) von 3:1 bis 1000:1 und insbesondere von 6:1 bis 250:1.

Aus den vorab genannten Werten geht hervor, dass die erfindungsgemäß eingesetzten roten, blauen und grünen Interferenzpigmente über einen äußerst geringen Grobkornanteil verfügen. Darüber hinaus ist es besonders bevorzugt, wenn sie auch einen hohen mittleren Feinkornanteil aufweisen, bei dem bis zu 40% der Pigmentteilchen eine Partikelgröße im Bereich von 12 bis 20 $\mu$m aufweisen.

Mit Interferenzpigmenten dieser Partikelgrößen und insbesondere dieser Partikelgrößenverteilung kann erfindungsgemäß eine hohe Flächenabdeckung der Druckflächeneinheiten bei gleichzeitig guten coloristischen Werten (Sättigung, Chroma) erzielt werden.

Als rote, blaue und grüne Interferenzpigmente können im erfindungsgemä-ßen Druckverfahren Interferenzpigmente verschiedener Hersteller eingesetzt werden, beispielsweise die im Handel erhältlichen Interferenzpigmente, welche unter den Bezeichnungen Iriodin®, Colorstream®, Xirallic®, Pyrisma®, Miraval®, Lustrepak®, Colorcrypt®, Colorcode® und Securalic® von der Firma Merck KGaA angeboten werden, weiterhin Pigmente der Bezeichnung Mearlin® sowie Pigmente der Lumina®Royal-Reihe der BASF SE und auch andere kommerziell erhältliche Interferenzpigmente anderer Hersteller. Wenn diese Pigmente die vorab beschriebenen Anforderungen hinsichtlich Farbwinkel, Sättigung, Chroma und Partikelgröße erfüllen, sind mit dem erfindungsgemäßen Druckverfahren qualitativ hochwertige, mehrfarbige Druckbilder erhältlich, die, wenn gewünscht, einen fotorealistischen optischen Eindruck aufweisen können.

Als besonders geeignet haben sich Interferenzpigmente erwiesen, die unter den Bezeichnungen Iriodin® und Pyrisma® im Handel sind, insbesondere die Interferenzpigmente der Pyrisma®-Serie.

Die nunmehrigen Erfinder haben darüber hinaus aber auch Interferenzpigmente gefunden, die für die Durchführung des erfindungsgemäßen Druckverfahrens besonders gut geeignet und daher ebenfalls Gegenstand der vorliegenden Erfindung sind.

Wie vorab bereits beschrieben, basiert das erfindungsgemäße Druckverfahren insbesondere darauf, dass aus einer Druckfarbe, die rote Interferenzpigmente enthält und aus einer Druckfarbe, die grüne Interferenzpigmente enthält, durch aufeinanderfolgendes Aufbringen dieser Druckfarben auf dieselbe Flächeneinheit eine gelbe Druckflächeneinheit gebildet werden kann. Zu diesem Zwecke müssen die roten Interferenzpigmente und die grünen Interferenzpigmente, die in den jeweiligen Druckfarben enthalten sind, besonders gut aufeinander abgestimmt werden.

Das rote Interferenzpigment und das grüne Interferenzpigment bestehen jeweils aus einem plättchenförmigen transparenten Substrat und einer sich auf dem Substrat befindenden Beschichtung bestehen, wobei die Beschichtung jeweils zu mindestens 85 Gew.%, bezogen auf das Gewicht der Schicht, aus Titandioxid und/oder Titandioxidhydrat besteht und wobei das rote Interferenzpigment im CIELUV-Farbraumsystem einen Farbtonwinkel $h_{u'v'}$ im Bereich von 1° bis 7° und das grüne Interferenzpigment einen Farbtonwinkel $h_{u'v'}$ im Bereich von 110° bis 120° aufweist, jeweils bestimmt in einer separaten, vollflächigen Beschichtung aus der jeweiligen farbigen Druckfarbe auf einem schwarzen Substrat unter der Messbedingung 45°/as 25°.

Bei dem plättchenförmigen transparenten Substrat handelt es sich dabei um Plättchen aus natürlichem oder synthetischem Glimmer, aus Kaolin, Sericit, Talk oder $SiO_2$. Besonders bevorzugt sind silikatische Substrate, insbesondere natürlicher Glimmer.

Die sich auf dem Substrat befindende Beschichtung, die das Substrat umhüllt, besteht jeweils zu mindestens 85 Gew.%, bezogen auf das Gewicht der Beschichtung, aus Titandioxid und/oder Titandioxidhydrat. Sie kann auch zu mindestens 90 Gew.%, 95 Gew.% oder zu 100 Gew.% aus Titandioxid und/oder Titandioxidhydrat bestehen. Dabei kann Titandioxid sowohl in der Anatas als auch in der Rutilmodifikation vorliegen und liegt vorzugsweise in der Rutilmodifikation vor. Des weiteren kann die Beschichtung Oxide und/oder Oxidhydrate des Zinns, des Siliziums und/oder des Aluminiums in einer Menge von 0,01 bis 15 Gew.%, vorzugsweise von 0,5 bis 10 Gew.%, insbesondere von 0,5 bis 5 Gew.%, bezogen auf das Gewicht der Beschichtung, enthalten. Vorzugsweise sind außer den genannten keine weiteren Inhaltsstoffe in der Beschichtung enthalten.

Das rote Interferenzpigment im Verfahren gemäß der vorliegenden Erfindung weist darüber hinaus im CIELUV-Farbraumsystem einen Farbtonwinkel $h_{u'v'}$ im Bereich von 1° bis 7°, auf, gemessen unter den vorab beschriebenen Bedingungen. Des Weiteren weist das rote Interferenzpigment eine Sättigung $S^*_{u'v'}$ von $\geq$ 0,65 sowie ein Chroma $C^*_{u'v'}$ von $\geq$ 33, bevorzugt von >40, auf.

Der Farbtonwinkel $h_{u'v'}$ wird zu einem wesentlichen Teil durch die Dicke der $TiO_2$-haltigen Beschichtung auf dem Substrat bestimmt. Die geometrische Schichtdicke dieser Beschichtung bei dem erfindungsgemäßen roten Interferenzpigment liegt daher im Bereich von 70 bis 110 nm.

Das grüne Interferenzpigment im Verfahren gemäß der vorliegenden Erfindung weist im CIELUV-Farbraumsystem einen Farbtonwinkel $h_{u'v'}$ im Bereich von 110° bis 120°, auf, gemessen unter den vorab beschriebenen Bedingungen. Des Weiteren weist das grüne Interferenzpigment eine Sättigung $S^*_{u'v'}$ von $\geq$ 0,45 sowie ein Chroma $C^*_{u'v'}$ von $\geq$ 30, bevorzugt von >30, auf.

Die geometrische Schichtdicke der $TiO_2$-haltigen Beschichtung bei dem erfindungsgemäßen grünen Interferenzpigment liegt im Bereich von 160 bis 200 nm.

Die Bestimmung der geometrischen Schichtdicke der $TiO_2$-haltigen Beschichtung bei den erfindungsgemäßen Interferenzpigmenten kann in einfachster Weise über das Ausmessen von geeigneten elektronenmikroskopischen Schnittbildern erfolgen. Zur Erzielung verlässlicher Werte werden jeweils mindestens 100 Schnittbilder ausgewertet und die Ergebnisse gemittelt.

Um im erfindungsgemäßen Druckverfahren eine hohe Flächenabdeckung durch die erfindungsgemäßen Interferenzpigmente erzielen zu können, spielt, wie vorab bereits beschrieben, auch die Partikelgröße sowie die Partikelgrößenverteilung der Interferenzpigmente eine massgebliche Rolle. Die Partikelgröße für die erfindungsgemäßen roten und grünen Interferenzpigmente liegt daher im Bereich von 5 bis 30 $\mu$m, bei einem $d_{95}$-Wert von <25 $\mu$m, einem $d_{50}$-Wert von < 15 $\mu$m sowie vorzugsweise bei einem $d_{10}$-Wert von < 10 $\mu$m.

Es ist selbstverständlich, dass die genannten Partikelgrößen der erfindungsgemäßen roten und grünen Interferenzpigmente erfordern, das bei ihrer Herstellung Substrate in den entsprechenden Abmessungen eingesetzt werden.

Die Herstellung der erfindungsgemäßen roten und grünen Interferenzpigmente kann nach üblichen Verfahren zur Herstellung von Interferenzpigmenten erfolgen, wie sie an sich seit langem bekannt sind.

Vorzugsweise wird dabei ein nasschemisches Verfahren mit anorganischen Ausgangsstoffen eingesetzt. Die Belegung des plättchenförmigen Substrats mit einer $TiO_2$-haltigen Beschichtung erfolgt dabei in einer temperierten wässrigen Dispersion der Substratpartikel unter Zugabe mindestens einer Lösung eines anorganischen Titansalzes, wobei die Suspension auf einen pH-Wert eingestellt und bei diesem konstant gehalten wird, bei dem Titanoxid-Hydrat auf die Substratplättchen auffällt. Zeitlich getrennt oder gemeinsam mit der Lösung des anorganischen Salzes können zusätzlich noch geringe Mengen einer Lösung eines anorganischen Zinnsalzes, eines anorganischen Siliziumsalzes und/oder einer Lösung eines anorganischen Aluminiumsalzes zu der Suspension gegeben werden. Die Zugabe der Titansalzlösung wird beendet, sobald der gewünschte Farbendpunkt erreicht ist. Anschließend wird in der Regel zur Vervollständigung der Fällungsreaktion noch etwas nachgerührt und danach das erhaltene Pigment abgetrennt, gewaschen und weiter aufgearbeitet. Vorzugsweise wird der isolierte Feststoff getrocknet und nachfolgend bei einer Temperatur von größer 500°C kalziniert. Durch die Kalzinierung wird das Titanoxid-Hydrat vollständig oder nahezu vollständig in Titandioxid überführt.

Im erfindungsgemäßen Druckverfahren bestehen die roten, blauen und grünen Druckfarben jeweils aus einem Druckfarbenvehikel und den entsprechenden roten, blauen oder grünen Interferenzpigmenten, deren Aufbau und Eigenschaften vorab bereits beschrieben wurden.

Insbesondere besteht eine erfindungsgemäße rote Druckfarbe aus einem Druckfarbenvehikel, welches ausschließlich mit einem roten Interferenzpigment farbig pigmentiert ist, wobei es sich bei dem roten Interferenzpigment im Wesentlichen um ein Interferenzpigment handelt, welches aus einem plättchenförmigen transparenten Substrat und einer sich auf dem Substrat befindenden Beschichtung besteht, wobei die Beschichtung jeweils zu mindestens 85 Gew.%, bezogen auf das Gewicht der Schicht, aus Titandioxid und/oder Titandioxidhydrat besteht und das Interferenzpigment im CIELUV-Farbraumsystem einen Farbtonwinkel $h_{u'v'}$ im Bereich von 1° bis 7° aufweist.

Eine grüne Druckfarbe gemäß der vorliegenden Erfindung besteht dagegen aus einem Druckfarbenvehikel, welches ausschließlich mit einem grünen Interferenzpigment farbig pigmentiert ist, wobei es sich bei dem grünen Interferenzpigment im Wesentlichen um ein Interferenzpigment handelt, welches aus einem plättchenförmigen transparenten Substrat und einer sich auf dem Substrat befindenden Beschichtung besteht, wobei die Beschichtung jeweils zu mindestens 85 Gew.%, bezogen auf das Gewicht der Beschichtung, aus Titandioxid und/oder Titandioxidhydrat besteht und das Interferenzpigment im CIELUV-Farbraumsystem einen Farbtonwinkel $h_{u'v'}$ im Bereich von 110° bis 120° aufweist.

Erfindungsgemäß bedeutet "im Wesentlichen" hier, dass die rote und die grüne Druckfarbe das erfindungsgemäße rote oder grüne Interferenzpigment jeweils zu einem Anteil von >50 Gew.%, bevorzugt von 75 bis 100 Gew.%, bezogen auf den Anteil an rotem oder grünem Interferenzpigment in der jeweiligen Druckfarbe, enthalten.

Alle anderen vorab in Bezug auf das rote und grüne Interferenzpigment, das jeweils in der entsprechenden Druckfarbe enthalten ist, sowie die bezüglich der Messbedingungen zur Bestimmung der farbmetrischen Größen getroffenen Aussagen gelten ebenfalls im Hinblick auf die erfindungsgemäßen Druckfarben.

Als Druckfarbenvehikel können kommerziell erhältliche oder im allgemeinen gebräuchliche Druckfarbenvehikel eingesetzt werden, die mindestens ein Bindemittel oder Bindemittelsystem sowie häufig auch Lösemittel enthalten, sofern es sich nicht um strahlenhärtende Bindemittelsysteme handelt.

Als Bindemittel können die üblicherweise für Druckprozesse eingesetzten Bindemittel oder Bindemittelsysteme verwendet werden, beispielsweise wässrige oder lösemittelhaltige Bindemittel auf Nitrocellulosebasis, Polyamidbasis, Acrylbasis, Polyvinylbutyralbasis, PVC-Basis, PUR-Basis oder geeignete Gemische aus diesen. Wichtig für den Erfolg des erfindungsgemäßen Druckverfahrens ist es, dass die entsprechenden Bindemittel oder Bindemittelsysteme transparent und farblos aushärten, um die optische Wirkung der Interferenzpigmente nicht zu behindern oder zu verfälschen.

Neben Wasser können auch organische Lösemittel eingesetzt werden, beispielsweise verzweigte oder unverzweigte Alkohole, Aromaten oder Alkylester, wie Ethanol, 1-Methoxy-Propanol, 1-Ethoxy-2-Propanol, Ethylacetat, Butylacetat, Toluol oder diese enthaltende Gemische. Die jeweilige farbige Druckfarbe kann jedoch auch arm an oder völlig frei von Lösemitteln sein, wenn strahlenhärtende Bindemittelsysteme, wie z. B. UV-härtende Bindemittelsysteme, verwendet werden.

Neben dem Bindemittel oder Bindemittelsystem und ggf. dem oder den Lösemitteln kann das Druckfarbenvehikel zusätzlich zu den jeweiligen Interferenzpigmenten noch verschiedene Hilfsstoffe und/oder Additive enthalten.

Als Additive kommen UV-Stabilisatoren, Inhibitoren, Flammschutzmittel, Gleitmittel, Dispergiermittel, Redispergiermittel, Entschäumer, Verlaufsmittel, Filmbildner, Haftvermittler, Trocknungsbeschleuniger, Trocknungsverzögerer, Fotoinitiatoren, etc. in Frage. Vorzugsweise enthält das jeweilige Druckfarbenvehikel alle notwendigen Hilfsstoffe in flüssiger Form, damit die optische Wirkung der Interferenzpigmente durch zusätzliche Feststoffe nicht abgeschwächt oder andersweitig beeinträchtigt wird. Aus diesem Grunde sind vorzugsweise in den fertigen farbigen Druckfarben weder (lösliche) Farbstoffe noch andere farbgebende Pigmente oder feste Füllstoffe außer den erfindungsgemäß notwendigen roten, blauen oder grünen Interferenzpigmenten enthalten.

Die vorab beschriebenen roten, blauen und grünen Interferenzpigmente sind in den erfindungsgemäß eingesetzten farbigen Druckfarben jeweils einzeln oder als Gemisch von zwei oder mehreren vorhanden. Das bedeutet, dass beispielsweise eine rote Druckfarbe entweder nur eine einzige Sorte von roten Interferenzpigmenten enthält oder aber auch mehrere verschiedene rote Interferenzpigmente enthalten kann (mehrere Sorten), die einen formal gleichen, einen ähnlichen oder auch einen voneinander verschiedenen Schichtaufbau auf dem gleichen Trägermaterial oder auch auf verschiedenen Trägermaterialien aufweisen können, die aber als Mischung die vorab beschriebenen Anforderungen hinsichtlich der Farbwinkels $h_{u'v'}$ und vorzugsweise auch hinsichtlich des Sättigungswertes $S^*_{u'v'}$ erfüllen. Optional sollten auch die Anforderungen an den Chromawert $C^*_{u'v'}$ erfüllt sein. Solange die genannten Bedingungen eingehalten werden und die eingesetzten Interferenzpigmente als Partikel eine hohe Transparenz aufweisen sowie vorzugsweise farblos sind, kann das erfindungsgemäße Verfahren mit Erfolg durchgeführt werden. Die beschriebene Zusammenstellung der Interferenzpigmente in der jeweiligen farbigen Druckfarbe gilt selbstverständlich in gleicher Weise wie für die oben beschriebene rote Druckfarbe auch für die blaue oder die grüne Druckfarbe.

Besonders bevorzugt werden als rote und grüne Interferenzpigmente jedoch die vorab beschriebenen erfindungsgemäßen roten und grünen Interferenzpigmente eingesetzt. Diese können in vorteilhafter Weise als einzige Pigmente, d.h. ohne Abmischung mit anderen, gleichfarbigen Interferenzpigmenten, in der jeweiligen Druckfarbe eingesetzt werden und führen zu qualitativ hochwertigen Druckergebnissen in fotografischer Qualität.

Der Gewichtsanteil der roten, blauen oder grünen Interferenzpigmente in der jeweiligen roten, blauen oder grünen Druckfarbe beträgt im allgemeinen zwischen 1 und 40 Gewichtsprozent und vorzugsweise zwischen 5 und 35 Gewichtsprozent, insbesondere zwischen 10 und 30 Gewichtsprozent, bezogen auf das Gesamtgewicht der jeweiligen Druckfarbe. Dabei ist es selbstverständlich, dass die Pigmentkonzentration in jedem Falle so gewählt wird, dass das erfindungsgemäße Druckverfahren mit den jeweils zur Verfügung stehenden Apparaturen problemlos ausgeführt werden kann. Darüber hinaus wird je nach eingesetzter Druckapparatur die Pigmentkonzentration in der Druckfarbe so ausgewählt, dass vorzugsweise der höchstmögliche, verarbeitbare Pigmentanteil ausgewählt wird, um die erforderliche Flächenabdeckung der zu bedruckenden Druckflächeneinheiten erhalten zu können. Wenn erforderlich, können die Pigmentkonzentrationen in der roten, blauen und grünen Druckfarbe voneinander verschieden gewählt werden, bevorzugt ist aber bei der Verwendung von gleichen Druckapparaturen für jeden Druckschritt auch die gleiche Pigmentkonzentration in jeder der drei Druckfarben.

Im erfindungsgemäßen Druckverfahren werden eine rote, eine blaue und eine grüne Druckfarbe, die jeweils mit roten, blauen oder grünen Interferenzpigmenten farbig pigmentiert sind, nacheinander in Form von Druckflächeneinheiten auf ein Substrat aufgebracht und verfestigt. Dabei setzt sich eine Druckflächeneinheit aus einer Druckschicht aus einer Druckfarbe oder mehreren Druckschichten aus zwei oder drei Druckfarben zusammen. Jede der einzelnen farbigen Druckschichten kann separat verfestigt werden oder die zwei oder drei Druckschichten auf einer Druckflächeneinheit können nacheinander aufgebracht und gemeinsam in einem einzigen Verfahrensschritt verfestigt werden.

Bei dem Substrat kann es sich erfindungsgemäß um praktisch alle Substrate handeln, die mit gewöhnlichen Druckverfahren bedruckt werden können, also um Papier verschiedenster Zusammensetzung, Kartonagen, Tapeten, Kunststofffolien, Kunststoffkörper, Metallfolien, Metallkörper, Textilien, Glas verschiedener Formen, um Holz oder um Verbundmaterialien, welche zumindest eines der vorab genannten Materialien enthalten. Die Substrate sollten vorzugsweise eine opake Oberfläche aufweisen, auf der das erfindungsgemäße Druckverfahren ausgeführt wird.

Die Substrate können Grundier- oder Satinierschichten aufweisen. Oftmals weisen übliche Grundier- oder Satinierschichten, insbesondere auf Papieren oder Kartonagen, eine helle oder weiße Farbgebung auf. Solcherart vorbeschichtete Substrate sind an sich als Substrate für den Einsatz im erfindungsgemäßen Druckverfahren zwar prinzipiell geeignet, allerdings sind die damit erzielbaren optischen Effekte im resultierenden Druckerzeugnis nur sehr subtil und nicht besonders ausgeprägt wahrnehmbar und weisen Ähnlichkeit mit Fotonegativen auf.

Vorzugsweise weisen daher die Substrate eine schwarze, dunkle oder farbige Oberfläche auf. Diese Farbgebung des Substrates kann je nach eingesetztem Substratmaterial und beabsichtigtem Verwendungszweck des fertigen Produktes entweder durch Masseeinfärbung des Substratmaterials, beispielsweise bei Kunststofffolien, oder mittels Beschichten des Substrates mit einer schwarzen, dunklen oder farbigen Beschichtung erhalten werden. Letztere kann zusätzlich oder alternativ zu Grundier- oder Satinierschichten aufgebracht werden. Unter einer dunklen Beschichtung sind zum Beispiel graue, braune, blaue, rote, violette oder grüne Beschichtungen zu verstehen, die nur eine geringe Helligkeit mit L*-Werten (CIELUV) im Bereich von 0 bis 20 aufweisen, also gemeinhin als dunkelgrau, dunkelbraun, dunkelblau, dunkelrot, dunkelviolett oder dunkelgrün bezeichnet werden. Sie können, genau wie farbige Beschichtungen, durch den Zusatz üblicher Farbmittel zu entsprechenden Beschichtungszusammensetzungen, wahlweise in Kombination mit Ruß oder anderen schwarzen Farbmitteln, erhalten werden. Vorzugsweise ist die gesamte zu bedruckende Oberfläche des Substrates mit einer solchen schwarzen, dunklen oder, alternativ, farbigen Beschichtung versehen. Es ist jedoch anzumerken, dass ein farbiges Substrat, welches eine zu bedruckende Oberfläche aufweist, die weder schwarz noch dunkelgrau ist, die Farbgebung des finalen Druckproduktes nach abgeschlossenem erfindungsgemäßen Druckverfahren erheblich beeinflusst. Soll das fertige Druckbild ein mehrfarbiges Druckbild mit fotorealistischem optischen Effekt sein, ist daher der Einsatz von schwarzen oder zumindest dunkelgrauen Oberflächen von Substraten angezeigt.

Auswirkungen auf die farbliche Gestaltung des erzielbaren Druckbildes hat auch die Reihenfolge des Auftrages der einzelnen farbigen Druckfarben. So ist es erfindungsgemäß besonders bevorzugt, wenn die Reihenfolge der auf dem Substrat aufzubringenden Druckfarben wie folgt ist:

erste Druckschicht: rote Druckfarbe mit roten Interferenzpigmenten,
zweite Druckschicht: grüne Druckfarbe mit grünen Interferenzpigmenten und
dritte Druckschicht: blaue Druckfarbe mit blauen Interferenzpigmenten (Reihenfolge RGB).

Zwar kann jede andere Druckreihenfolge ebenso eingesetzt werden. Es ist dann aber mit Farbabweichungen in den resultierenden Druckbildern zu rechnen, bei denen die zuletzt aufgebrachte Farbe deutlicher als die darunter liegenden Farben wahrnehmbar ist. Das kann je nach gewünschtem optischen Ergebnis durchaus vorteilhaft sein, ist aber zur Erzielung fotorealistischer Effekte nicht bevorzugt.

Um weiße Flächen oder Helligkeitsreflexe in den resultierenden Druckbildern zu betonen oder zu verstärken ist es außerdem vorteilhaft, wenn zusätzlich zu der roten, blauen und grünen Druckfarbe in einem vierten Druckschritt noch eine weitere Druckfarbe auf das Substrat aufgebracht wird, die mit weißen Interferenzpigmenten pigmentiert ist und keine weiteren farbgebenden Pigmente oder Farbstoffe enthält. Weiß gilt in der Farbenlehre genau wie schwarz nicht als Farbe. Daher ist die mit weißen Interferenzpigmenten pigmentierte Druckfarbe, die hier weiße Druckfarbe genannt wird, auch keine farbige Druckfarbe. Zur Erzeugung mehrfarbiger Druckbilder mit einem Farbspektrum über den gesamten Farbkreis ist das Aufbringen dieser weißen Druckfarbe nicht erforderlich, da grundsätzlich weiße Farbflächen auch durch Übereinanderdrucken der roten, grünen und blauen Druckfarben erzeugt werden können. Der Einsatz der weißen Druckfarbe erhöht jedoch die Brillanz der resultierenden Druckbilder und erleichtert das Druckverfahren insgesamt, da die Feinabstimmung der Druckfarben untereinander vereinfacht wird.

Vorzugsweise wird die weiße Druckfarbe nach dem Auftrag der roten, grünen und blauen Druckfarben aufgebracht. Die in der weißen Druckfarbe eingesetzten Interferenzpigmente unterliegen der einzigen Beschränkung, dass ihre Partikelgröße mit der gewählten Druckform verdruckbar sein muss.

Ansonsten kann praktisch jedes der bekannten und in großer Zahl verfügbaren weißen Interferenzpigmente eingesetzt werden. Vorzugsweise sind auch die weißen Interferenzpigmente als Einzelpartikel völlig transparent und enthalten keine absorbierenden Schichten oder Substrate.

Im erfindungsgemäßen Druckverfahren werden die drei farbigen Druckfarben in Form von Druckflächeneinheiten auf das zu bedruckende Substrat aufgebracht, wobei die mit den einzelnen farbigen Druckfarben jeweils bedruckten Druckflächeneinheiten nebeneinander oder ganz oder teilweise aufeinander, also überlappend, angeordnet sind. Nur bei ganz oder teilweise überlappenden Druckflächeneinheiten für die einzelnen Druckfarben kommt es im resultierenden Druckbild zu Mischfarben, die aus den roten, blauen und grünen Interferenzpigmenten in unterschiedlicher Zusammensetzung gebildet werden.

Unter Druckflächeneinheiten werden je nach einzusetzender Druckform Druckpunkte oder auch Druckflächen verstanden, die verschiedene Größen und Formen annehmen können, je nachdem, ob es sich um ein Rasterdruckverfahren handelt oder um ein Druckverfahren, bei dem größere Flächeneinheiten direkt bedruckt werden können.

Das erfindungsgemäße Druckverfahren kann generell auf die verschiedensten gängigen Druckverfahren angewandt und daher auch mit üblichen Druckwerkzeugen ausgeführt werden. So kann es als konventionelles analoges Druckverfahren wie beispielsweise als ein Flachdruckverfahren, ein Tiefdruckverfahren, ein Hochdruckverfahren oder ein Durchdruckverfahren oder als ein digitales Druckverfahren ausgeführt werden.

Unter Flachdruckverfahren sind dabei insbesondere konventionelle oder UV-härtende Offsetdruckverfahren oder auch Trockenoffsetdruckverfahren zu verstehen, die ohne Feuchtmittel durchgeführt werden. Als Tiefdruckverfahren sind beispielsweise Verpackungstiefdruck, Illustrationstiefdruck, Dekortiefdruck oder auch Intagliodruckverfahren (Stichtiefdruck) zu nennen. Unter Hochdruckverfahren sind ein Buchdruckverfahren, ein indirektes Hochdruckverfahren wie der Lettersetdruck oder das häufig verwendete Flexodruckverfahren zu verstehen. Ein bekanntes Durchdruckverfahren ist der Siebdruck. Als digitale Verfahren sind der Inkjetdruck, das tonerbasierende Elektrophotographieverfahren oder der Thermotransferdruck bekannt.

Alle diese gängigen Druckverfahren arbeiten gewöhnlich im Vierfarbdruck gemäß der CMYK-Farbzerlegung. Stattdessen kann nun das erfindungsgemäße Druckverfahren auf alle genannten Druckverfahren derart angewendet werden, dass statt der üblicherweise eingesetzten cyan, magenta, yellow und black pigmentierten Druckfarben nunmehr die ausschließlich mit Interferenzpigmenten pigmentierten roten, blauen, grünen und gegebenenfalls weißen Druckfarben nacheinander verdruckt werden.

Diese ergeben in den verschiedenen Farbkombinationen nämlich ebenfalls ein gelbes, cyanfarbenes oder magenta-farbiges Druckbild, und zwar in den Kombinationen Rot/Grün ---Gelb, Grün/Blau---Cyan und Blau/RotMagenta.

Jedes der vorab beschriebenen Druckverfahren gestattet in einem einzigen Druckvorgang jeweils eine maximale Schichtdicke der resultierenden trockenen Druckschicht. Diese ist von Druckverfahren zu Druckverfahren sehr verschieden. Entsprechend betragen die Schichtdicken der einzelnen Druckschichten im erfindungsgemäßen Druckverfahren 0,2 bis 250 µm. Es ist aber nachvollziehbar, dass bei sehr geringen Schichtdicken der einzelnen Druckschicht nur sehr wenig Pigmente auf die jeweilige Druckflächeneinheit aufgebracht werden. Daher kann in diesen Fällen zur Einstellung einer hohen Flächenbedeckung mit den jeweiligen Interferenzpigmenten der Druckschritt, mit dem eine einzelne farbige Druckfarbe auf das Substrat übertragen wird, gegebenenfalls ein oder mehrfach wiederholt werden. Die Druckschichtdicken (Trockenschichtdicken) für die einzelnen Druckfarben liegen daher bevorzugt im Bereich von 0,4 bis 80 µm, besonders bevorzugt im Bereich von 0,6 bis 10 µm und insbesondere im Bereich von 1,0 bis 5,0 µm.

Eine hohe Flächenbedeckung der einzelnen Druckflächeneinheiten mit den erfindungsgemäß eingesetzten Interferenzpigmenten kann zusätzlich auch durch die Auswahl der Druckwerkzeuge, beispielsweise durch die Rasterung der Druckwalzen und/oder das Schöpfvolumen der Näpfchen auf den Druckformen begünstigt werden. Solche Maßnahmen gehören jedoch zum Fachwissen des Druckfachmannes und müssen demzufolge hier nicht näher erläutert werden.

Das erfindungsgemäße Druckverfahren wird vorzugsweise so ausgeführt, dass jede der verschiedenen Druckfarben mit Hilfe des jeweils gleichen Druckverfahrens, d.h. mittels gleichartiger Druckwerkzeuge, aufgebracht wird. Zwar ist es grundsätzlich möglich, für die verschiedenen Druckschritte jeweils verschiedene Druckwerkzeuge einzusetzen, dadurch würde aber der Druckprozess unnötig verkompliziert und verteuert.

Das erfindungsgemäße Druckverfahren lässt sich an die meisten üblichen analogen und digitalen Druckverfahren anpassen und kann daher mit üblichen Druckwerkzeugen ausgeführt werden. Mit lediglich drei farbigen Druckfarben, die ausschließlich mit Interferenzpigmenten farbig pigmentiert sind, lassen sich im RGB-Modus mehrfarbige Druckbilder erstellen, die eine Farbpalette über den gesamten verfügbaren Farbraum abdecken können. Die erhaltenen Druckbilder können fotorealistische Effekte aufweisen und gleichzeitig, je nach Art der verwendeten Interferenzpigmente, über hohe Glanz- und/oder Glitzereffekte mit Tiefenwirkung verfügen, die sich in ihrem optischen Erscheinungsbild, bedingt durch den Partikelcharakter der Interferenzpigmente, deutlich von üblichen Fotoglanzdrucken unterscheiden. Darüber hinaus lässt sich das erfindungsgemäße Druckverfahren auch mit üblichen Druckverfahren im CMYK-Modus kombinieren, so dass auf ein und demselben Substrat bestimmte Oberflächen- oder Druckmotivteile im üblichen CMYK-Farbteilungsmodus und Teile von diesen oder davon verschiedene andere Oberflächen- oder Druckmotivteile im erfindungsgemäßen RGB-Modus bedruckt werden können. Für das farbige Gestalten von Oberflächen in Druckverfahren bieten sich damit neue, bisher nicht erzielbare Möglichkeiten und Effekte. Darüber hinaus gestattet das erfindungsgemäße Druckverfahren, zukünftig den über Druckverfahren zugänglichen Farbraum, insbesondere im Hinblick auf Farbtonvielfalt und Farbsättigung, deutlich zu erweitern, weil die durch das übliche CMYK-Druckverfahren bedingten Beschränkungen in dieser Hinsicht wegfallen und Interferenzpigmente der Interferenzfarben rot, grün und blau noch deutliche Verbesserungen in Bezug auf Sättigung und Chroma zulassen.

Gegenstand der vorliegenden Erfindung ist auch ein Druckerzeugnis, welches ein mehrfarbiges Druckbild auf einem Substrat darstellt und nach dem vorab beschriebenen Verfahren hergestellt ist. Das erfindungsgemäße Druckerzeugnis beinhaltet ein mehrfarbiges Druckbild, welches Farbtöne im gesamten durch Druckverfahren zugänglichen Farbraum aufweisen kann und, bedingt durch die ausschließliche Verwendung von Interferenzpigmenten, außerordentlich attraktive Glanz-und/oder Glitzereffekte aufweisen kann, zusätzlich zu einer beeindruckenden Tiefe und Brillanz der gedruckten Farbflächen. Darüber hinaus können fotorealistische Druckeffekte erzielt werden, die fotografischen Aufnahmen sehr ähnlich sind, zusätzlich aber einen tiefen Glanz aufweisen, der mit üblichen Fotodruckverfahren nicht erhältlich ist und sich optisch eindrucksvoll von Fotoglanzdrucken unterscheidet. Motivdetails im Druckbild sind scharf abbildbar. Es versteht sich von selbst, dass die Motivauswahl für das erfindungsgemäß erhaltene Druckbild lediglich durch die Wahl der Druckwerkzeuge, sonst aber in keiner Weise beschränkt ist.

Darüber hinaus ist auch die Verwendung der vorab beschriebenen Druckerzeugnisse in dekorativen und künstlerischen Produkten Gegenstand der vorliegenden Erfindung. Die vorab beschriebenen optischen Eigenschaften der erfindungsgemäßen Druckerzeugnisse prädestinieren deren Verwendung in dekorativen Produkten aller Art, die entweder selbst aus den erfindungsgemäßen Druckerzeugnissen bestehen, wie beispielsweise Werbe- und Akzidenzdrucke, oder diese enthalten, wie beispielsweise Verpackungen für verschiedenste Produkte und in unterschiedlichster Ausführung. Da die Druckerzeugnisse gemäß der vorliegenden Erfindung über bisher in Druckverfahren nicht erhältliche optische Eigenschaften verfügen, eignen sie sich auch zur Verwendung im künstlerischen Bereich, beispielsweise für fotoähnliche Erzeugnisse, Collagen, Kalender, Textilbeschichtungen und vieles mehr.

Die erfindungsgemäß hergestellten Druckerzeugnisse verfügen über attraktive optische Eigenschaften, die bisher in dieser Art am Markt nicht verfügbar sind und daher einen wertvollen Beitrag zur Erweiterung der Palette an dekorativen und künstlerischen Produkten leisten.

Figur 1 :  zeigt den CIELUV-Farbraum (1976) mit dem Neutral- oder Unbuntpunkt E und die Struktur zur Bestimmung von Farbwinkeln in diesem Farbraum

Die Erfindung soll nachfolgend anhand von Beispielen erläutert, nicht jedoch auf diese beschränkt werden.

Beispiel 1:

Siebdruckverfahren

Es werden eine rote, eine grüne und eine blaue Druckfarbe aus einem handelsüblichen Druckfarbenvehikel für den Siebdruck hergestellt, indem eine jeweils 15 Gew.%ige Pigmentkonzentration durch Zugabe der Pigmente Pyrisma® T30-21 Red, Pyrisma® T30-24 Green sowie Pyrisma® T30-23 Blue eingestellt wird. Zur Herstellung einer vierten Druckfarbe wird dasselbe Druckvehikel mit 15 Gew.% des weißen Interferenzpigmentes Iriodin® 6123 Icy White Satin innig vermischt.

Auf einem schwarz gefärbten Karton (Fedrigoni SPX Black) wird mit einem üblichen Sieb (40L/cm, 80 PW, Maschenweite 166 $\mu$m) nacheinander ein in die Druckfarben rot-grün-blau zerlegtes Motiv in dieser Reihenfolge gedruckt und die weißen Flächeneinheiten nachträglich mit der weißen Druckfarbe verstärkt.

Es wird ein scharf begrenztes Druckbild von fotografischer Qualität in der gewünschten multicolor-Farbgebung erhalten, welches einen starken Perlglanz aufweist.

Beispiel 2:

Tiefdruckverfahren

Es werden eine rote, eine grüne und eine blaue Druckfarbe aus einem handelsüblichen Druckfarbenvehikel für den Tiefdruck (Siegwerk 5036 Verschnitt NC TOF) hergestellt, indem eine jeweils 25 Gew.%ige Pigmentkonzentration durch Zugabe der Pigmente Pyrisma® T30-21 Red, Pyrisma® T30-24 Green sowie Pyrisma® T30-23 Blue eingestellt wird. Zur Herstellung einer vierten Druckfarbe wird dasselbe Druckvehikel mit 25 Gew.% des weißen Interferenzpigmentes Iriodin® 6123 Icy White Satin innig vermischt.

Auf einem schwarz gefärbten Karton (Fedrigoni SPX Black) wird mit einem Tiefdruckzylinder (40L/cm, Näpfchentiefe 45 $\mu$m, Lasergravur) im Tiefdruckverfahren nacheinander ein in die Druckfarben rot-grün-blau zerlegtes Motiv in dieser Reihenfolge gedruckt und die weißen Flächeneinheiten nachträglich mit der weißen Druckfarbe verstärkt.

Es wird ein scharf begrenztes Druckbild von fotografischer Qualität in der gewünschten multicolor-Farbgebung erhalten, welches neben einem starken Perlglanz eine große optische Tiefe und virtuelle Dreidimensionalität aufweist.

Beispiel 3:

Herstellung eines roten Interferenzpigmentes

70 g natürlicher Glimmer der Teilchengröße 5-25 $\mu$m ($d_{50}$= 12 $\mu$m) werden in 1,4 l VE-Wasser suspendiert und die Suspension unter starkem Rühren auf 75°C erwärmt. Zu dieser Suspension werden bei pH=2,0 eine Lösung aus 3 g SnCl$_4$ $\times$ 5H$_2$O in 70 g Wasser langsam zudosiert. Der pH-Wert wird mit 32%iger Natronlauge konstant bei 2,0 gehalten. Danach wird der pH-Wert auf 1,8 gesenkt und bei diesem pH-Wert werden ca. 750 g einer 32%igen TiCl$_4$-Lösung langsam zudosiert. Dabei wird der pH-Wert wird mit 32%iger Natronlauge konstant gehalten. Die Zugabe der TiCl$_4$-Lösung wird beim Erreichen des gewünschten Farbendpunktes abgebrochen. Anschließend wird noch eine Stunde nachgerührt und dann das beschichtete Glimmerpigment abfiltriert, gewaschen und bei 110°C 15 h getrocknet. Zuletzt wird das Pigment 1h bei 850°C geglüht.

Es wird ein Interferenzpigment mit intensiver roter Interferenzfarbe erhalten, welches einen Farbtonwinkel $h_{u'v'}$ von 4,2° aufweist,. Der ebenfalls im CIELUV-Farbraumsystem (unter den vorab beschriebenen Bedingungen) bestimmte Chroma-Wert $C^*_{u'v'}$ liegt bei 42,0 und der Sättigungswert $S^*_{u'v'}$ bei 0,69.

Die TiO$_2$-haltige Beschichtung auf dem Glimmersubstrat besteht zu mehr als 98 Gew.% aus TiO$_2$ in der Rutilmodifikation und weist eine geometrische Schichtdicke von etwa 85 nm auf.

Beispiel 4:

Herstellung eines grünen Interferenzpigmentes

70 g natürlicher Glimmer der Teilchengröße 5-25 $\mu$m ($d_{50}$= 12 $\mu$m) werden in 1,4 l VE-Wasser suspendiert und die Suspension unter starkem Rühren auf 75°C erwärmt. Zu dieser Suspension werden bei pH=2,0 eine Lösung aus 3 g SnCl$_4$ x 5H$_2$O in 70 g Wasser langsam zudosiert. Der pH-Wert wird mit 32%iger Natronlauge konstant bei 2,0 gehalten. Danach wird der pH-Wert auf 1,8 gesenkt und bei diesem pH-Wert werden ca. 1200 g einer 32%igen TiCl$_4$-Lösung langsam zudosiert. Dabei wird der pH-Wert wird mit 32%iger Natronlauge konstant gehalten. Die Zugabe der TiCl$_4$-Lösung wird beim Erreichen des gewünschten Farbendpunktes abgebrochen. Anschließend wird noch eine Stunde nachgerührt und dann das beschichtete Glimmerpigment abfiltriert, gewaschen und bei 110°C 15 h getrocknet. Zuletzt wird das Pigment 1h bei 850°C geglüht.

Es wird ein Interferenzpigment mit intensiver grüner Interferenzfarbe, die einen leichten Gelbstich aufweist, erhalten, welches einen Farbtonwinkel $h_{u'v'}$ von 118° aufweist. Der ebenfalls im CIELUV-Farbraumsystem (unter den vorab beschriebenen Bedingungen) bestimmte Chroma-Wert $C^*_{u'v'}$ liegt bei 32,0 und der Sättigungswert $S^*_{u'v'}$ bei 0,50. Die TiO$_2$-haltige Beschichtung auf dem Glimmersubstrat besteht zu mehr als 98 Gew.% aus TiO$_2$ in der Rutilmodifikation und weist eine geometrische Schichtdicke von etwa 180 nm auf.

Beispiel 5:

Tiefdruckverfahren

Es werden eine rote, eine grüne und eine blaue Druckfarbe aus einem handelsüblichen Druckfarbenvehikel für den Tiefdruck (Siegwerk 5036 Verschnitt NC TOF) hergestellt, indem eine jeweils 25 Gew.%ige Pigmentkonzentration durch Zugabe des roten Interferenzpigmentes aus Beispiel 3, des grünen Interferenzpigmentes aus Beispiel 4 sowie von Pyrisma® T30-23 Blue eingestellt wird.

Auf einem schwarz gefärbten Karton (Fedrigoni SPX Black) wird mit einem Tiefdruckzylinder (40L/cm, Näpfchentiefe 45 $\mu$m, Lasergravur) im Tiefdruckverfahren nacheinander ein in die Druckfarben rot-grün-blau zerlegtes Motiv in dieser Reihenfolge gedruckt. Es erfolgt keine nachträgliche Verstärkung von weißen Flächeneinheiten mit einer weißen Druckfarbe. Es wird ein scharf begrenztes Druckbild von fotografischer Qualität in der gewünschten multicolor-Farbgebung erhalten, welches einen starken Perlglanz, eine große optische Tiefe und eine virtuelle Dreidimensionalität aufweist. Die weißen Flächeneinheiten zeigen einen silberweißen Glanz und gelbe Flächeneinheiten erscheinen in satter, glänzender Farbgebung.

**Patentansprüche**

1. Verfahren zum Drucken mehrfarbiger Druckbilder im RGB-Modus, wobei drei farbige Druckfarben nacheinander in Form von Druckflächeneinheiten auf ein Substrat aufgebracht und verfestigt werden, **dadurch gekennzeichnet, dass** die Druckfarben jeweils aus einem Druckfarbenvehikel bestehen, welches ausschließlich mit Interferenzpigmenten farbig pigmentiert ist und eine Druckfarbe jeweils rote Interferenzpigmente, grüne Interferenzpigmente oder blaue Interferenzpigmente enthält, und wobei aus den drei farbigen Druckfarben nebeneinander und/oder übereinander liegende Druckflächeneinheiten gebildet werden, die ein vielfarbiges Gesamtdruckbild ergeben, bei dem gelbe Druckflächeneinheiten durch aufeinander folgendes Aufbringen der Druckfarbe, die rote Interferenzpigmente enthält und der Druckfarbe, die grüne Interferenzpigmente enthält, gebildet werden,

   wobei das rote und das grüne Interferenzpigment jeweils aus einem plättchenförmigen transparenten Substrat und einer sich auf dem Substrat befindenden Beschichtung besteht, wobei die Beschichtung zu mindestens 85 Gew.%, bezogen auf das Gewicht der Beschichtung, aus Titandioxid und/oder Titandioxidhydrat besteht, wobei das rote Interferenzpigment im CIELUV-Farbraumsystem einen Farbtonwinkel $h_{u'v'}$ im Bereich von 1° bis 7° und das grüne Interferenzpigment im CIELUV-Farbraumsystem einen Farbtonwinkel $h_{u'v'}$ im Bereich von 110° bis 120°aufweist,
   und die Interferenzpigmente im CIELUV-Farbraumsystem folgende Sättigungswerte aufweisen:

   | | |
   |---|---|
   | rote Interferenzpigmente | $S^*_{u'v'} \geq 0{,}65$, |
   | blaue Interferenzpigmente | $S^*_{u'v'} \geq 1{,}2$ und |
   | grüne Interferenzpigmente | $S^*_{u'v'} \geq 0{,}45$ |

   und die Interferenzpigmente im CiELUV-Farbraumsystem folgende Chromawerte aufweisen:

   | | |
   |---|---|
   | rote Interferenzpigmente | $C^*_{u'v'} \geq 33$ |
   | blaue Interferenzpigmente | $C^*_{u'v'} \geq 50$ und |
   | grüne Interferenzpigmente | $C^*_{u'v'} \geq 30$, |

   die Farbtonwinkel, Sättigungs- und Chromawerte jeweils bestimmt in einer separaten, vollflächigen Beschichtung aus der jeweiligen farbigen Druckfarbe auf einem schwarzen Substrat unter der Messbedingung 45°/as 25°.

2. Verfahren gemäß Anspruch 1, **dadurch gekennzeichnet, dass** der Farbtonwinkel $h_{u'v'}$ der roten Interferenzpigmente einen Abstand zum Farbtonwinkel $h_{u'v'}$ der grünen Interferenzpigmente im Bereich von 110 bis 130 Winkelgrad (grd) aufweist.

3. Verfahren gemäß Anspruch 1 oder 2, **dadurch gekennzeichnet, dass** die blauen Interferenzpigmente im CIELUV Farbraumsystem einen Farbtonwinkel $h_{u'v'}$ im Bereich von 210° bis 280° aufweisen, bestimmt in einer separaten,

EP 3 253 832 B1

vollflächigen Beschichtung aus der blauen Druckfarbe auf einem schwarzen Substrat unter der Messbedingung 45°/as 25°, wobei der Abstand des Farbtonwinkels $h_{u'v'}$ der grünen Interferenzpigmente zum Farbtonwinkel $h_{u'v'}$ der blauen Interferenzpigmente sowie der Abstand des Farbtonwinkels $h_{u'v'}$ der blauen Interferenzpigmente zum Farbtonwinkel $h_{u'v'}$ der roten Interferenzpigmente jeweils im Bereich von 90 bis 160 Winkelgrad (grd) liegt.

4. Verfahren gemäß einem oder mehreren der Ansprüche 1 bis 3, **dadurch gekennzeichnet, dass** die roten, blauen und grünen Interferenzpigmente jeweils aus transparenten, farblosen, plättchenförmigen Trägern bestehen, die mit einer oder mehreren Schichten aus transparenten, farblosen Materialien beschichtet sind.

5. Verfahren gemäß einem oder mehreren der Ansprüche 1 bis 4, **dadurch gekennzeichnet, dass** die roten, blauen und grünen Interferenzpigmente eine Teilchengröße im Bereich von 5 bis 45 $\mu$m sowie einen anzahlgewichteten $d_{90}$-Wert von < 40 $\mu$m aufweisen, bestimmt durch Einzelauswertung von mehr als 1000 Pigmentpartikeln im Lichtmikroskop mit automatisierter Bildanalyse.

6. Verfahren gemäß einem oder mehreren der Ansprüche 1 bis 5, **dadurch gekennzeichnet, dass** die drei Druckfarben in der Reihenfolge rot-grün-blau auf das Substrat aufgebracht werden.

7. Verfahren gemäß einem oder mehreren der Ansprüche 1 bis 6, **dadurch gekennzeichnet, dass** zusätzlich zu den drei farbigen Druckfarben eine Druckfarbe aufgebracht wird, die mit weißen Interferenzpigmenten pigmentiert ist und keine weiteren farbgebenden Pigmente oder Farbstoffe enthält.

8. Verfahren gemäß einem oder mehreren der Ansprüche 1 bis 7, **dadurch gekennzeichnet, dass** es sich bei dem Substrat, auf das die drei farbigen Druckfarben aufgebracht werden, um ein Papier, eine Kartonage, eine Tapete, eine Kunststofffolie, einen Kunststoffkörper, eine Metallfolie, einen Metallkörper, ein Textil, Glas, Holz oder ein Verbundmaterial handelt, welches zumindest eines der genannten Materialien enthält.

9. Verfahren gemäß Anspruch 8, **dadurch gekennzeichnet, dass** es sich um ein Substrat mit einer schwarzen Oberfläche oder um ein Substrat mit einer farbigen Oberfläche, die einen L*-Wert (CIELUV) im Bereich von 0 bis 20 aufweist, handelt.

10. Verfahren gemäß einem oder mehreren der Ansprüche 1 bis 9, **dadurch gekennzeichnet, dass** es sich um ein Flachdruckverfahren, ein Tiefdruckverfahren, ein Hochdruckverfahren, ein Durchdruckverfahren oder um ein digitales Druckverfahren handelt.

11. Verfahren gemäß einem oder mehreren der Ansprüche 1 bis 10, **dadurch gekennzeichnet, dass** jede der Druckfarben mit einer Trockenschichtdicke im Bereich von 0,2 bis 250 $\mu$m aufgebracht wird.

12. Druckerzeugnis, hergestellt nach einem Verfahren gemäß einem oder mehreren der Ansprüche 1 bis 11.

13. Verwendung eines Druckerzeugnisse gemäß Anspruch 12 in dekorativen oder künstlerischen Produkten.


**Claims**

1. Process for printing multicoloured print images in RGB mode, in which three coloured printing inks are applied successively in the form of print area units to a substrate and solidified, **characterised in that** the printing inks each consist of a printing ink vehicle which has been colour-pigmented exclusively with interference pigments and a printing ink in each case comprises red interference pigments, green interference pigments or blue interference pigments, and in which print area units lying alongside one another and/or one on top of the other are formed from the three coloured printing inks and give rise to a multicoloured overall print image, in which yellow print area units are formed by successive application of the printing ink that comprises red interference pigments and the printing ink that comprises green interference pigments,

where the red interference pigment and the green interference pigment each consist of a flake-form transparent substrate and a coating located on the substrate, where the coating consists of at least 85% by weight, based on the weight of the coating, of titanium dioxide and/or titanium dioxide hydrate, where the red interference pigment has a hue angle $h_{u'v'}$ in the CIELUV colour space system in the range from 1° to 7° and the green interference pigment has a hue angle $h_{u'v'}$ in the CIELUV colour space system in the range from 110° to 120°,
and the interference pigments have the following saturation values in the CIELUV colour space system:

| red interference pigments | $S^*_{u'v'} \geq 0.65$, |
| blue interference pigments | $S^*_{u'v'} \geq 1.2$ and |
| green interference pigments | $S^*_{u'v'} \geq 0.45$ |

and the interference pigments have the following chroma values in the CIELUV colour space system:

| red interference pigments | $C^*_{u'v'} \geq 33$ |
| blue interference pigments | $C^*_{u'v'} \geq 50$ and |
| green interference pigments | $C^*_{u'v'} \geq 30$, |

the hue angles, saturation values and chroma values in each case determined in a separate, full-area coating comprising the respective coloured printing ink on a black substrate under the measurement condition 45°/as 25°.

2. Process according to Claim 1, **characterised in that** the hue angle $h_{u'v'}$ of the red interference pigments has a separation from the hue angle $h_{u'v'}$ of the green interference pigments in the range from 110 to 130 angle degrees (deg).

3. Process according to Claim 1 or 2, **characterised in that** the blue interference pigments have a hue angle $h_{u'v'}$ in the CIELUV colour space system in the range from 210° to 280°, determined in a separate, full-area coating comprising the blue printing ink on a black substrate under the measurement condition 45°/as 25°, where the separation of the hue angle $h_{u'v'}$ of the green interference pigments from the hue angle $h_{u'v'}$ of the blue interference pigments and the separation of the hue angle $h_{u'v'}$ of the blue interference pigments from the hue angle $h_{u'v'}$ of the red interference pigments is in each case in the range from 90 to 160 angle degrees (deg).

4. Process according to one or more of Claims 1 to 3, **characterised in that** the red, blue and green interference pigments each consist of transparent, colourless, flake-form supports which have been coated with one or more layers of transparent, colourless materials.

5. Process according to one or more of Claims 1 to 4, **characterised in that** the red, blue and green interference pigments have a particle size in the range from 5 to 45 $\mu$m and a number-weighted $d_{90}$ value of $< 40$ $\mu$m, determined by individual evaluation of more than 1000 pigment particles under a light microscope with automated image analysis.

6. Process according to one or more of Claims 1 to 5, **characterised in that** the three printing inks are applied to the substrate in the sequence red-green-blue.

7. Process according to one or more of Claims 1 to 6, **characterised in that**, in addition to the three coloured printing inks, a printing ink is applied which has been pigmented with white interference pigments and comprises no further colouring pigments or dyes.

8. Process according to one or more of Claims 1 to 7, **characterised in that** the substrate to which the three coloured printing inks are applied is a paper, a cardboard, a wallpaper, a plastic film, a plastic body, a metal foil, a metal body, a textile, glass, wood or a composite material which comprises at least one of the said materials.

9. Process according to Claim 8, **characterised in that** the substrate has a black surface or the substrate has a coloured surface which has an L* value (CIELUV) in the range from 0 to 20.

10. Process according to one or more of Claims 1 to 9, **characterised in that** it is a planographic printing process, a gravure printing process, a relief printing process, a screen printing process or a digital printing process.

11. Process according to one or more of Claims 1 to 10, **characterised in that** each of the printing inks is applied in a dry layer thickness in the range from 0.2 to 250 $\mu$m.

**12.** Print product produced by a process according to one or more of Claims 1 to 11.

**13.** Use of a print product according to Claim 12 in decorative or artistic products.

**Revendications**

**1.** Procédé pour imprimer des images d'impression multicolores dans le mode RGB, dans lequel trois encres d'impression couleur sont appliquées successivement sous la forme d'unités de zone d'impression sur un substrat et sont solidifiées, **caractérisé en ce que** les encres d'impression sont chacune constituées par un véhicule d'encre d'impression qui a été pigmenté en termes de couleur exclusivement avec des pigments d'interférence, et une encre d'impression comprend dans chaque cas des pigments d'interférence de rouge, des pigments d'interférence de vert ou des pigments d'interférence de bleu, et dans lequel des unités de zone d'impression qui sont étendues parallèlement les unes aux autres et/ou sur le sommet des unes des autres sont formées à partir des trois encres d'impression couleur et donnent naissance à une image d'impression totale multicolore, dans lequel des unités de zone d'impression en jaune sont formées au moyen de l'application successive de l'encre d'impression qui comprend des pigments d'interférence de rouge et de l'encre d'impression qui comprend des pigments d'interférence de vert,

dans lequel le pigment d'interférence de rouge et le pigment d'interférence de vert sont chacun constitués par un substrat transparent sous forme de flocons et par un revêtement positionné sur le substrat, dans lequel le revêtement est constitué par au moins 85 % en poids, sur la base du poids du revêtement, de dioxyde de titane et/ou d'hydrate de dioxyde de titane,
dans lequel le pigment d'interférence de rouge présente un angle de teinte $h_{u'v'}$ dans le système d'espace chromatique CIELUV dans la plage de 1° à 7° et le pigment d'interférence de vert présente un angle de teinte $h_{u'v'}$ dans le système d'espace chromatique CIELUV dans la plage de 110° à 120°,
et les pigments d'interférence présentent les valeurs de saturation suivantes dans le système d'espace chromatique CIELUV :

pigments d'interférence de rouge $S^*_{u'v'} \geq 0{,}65$,
pigments d'interférence de bleu $S^*_{u'v'} \geq 1{,}2$ et
pigments d'interférence de vert $S^*_{u'v'} \geq 0{,}45$

et les pigments d'interférence présentent les valeurs de chrominance suivantes dans le système d'espace chromatique CIELUV :

pigments d'interférence de rouge $C^*_{u'v'} \geq 33$
pigments d'interférence de bleu $C^*_{u'v'} \geq 50$ et
pigments d'interférence de vert $C^*_{u'v'} \geq 30$,

les angles de teinte, les valeurs de saturation et les valeurs de chrominance étant déterminés dans chaque cas dans un revêtement complet "toutes zones" séparé comprenant l'encre d'impression couleur respective sur un substrat noir sous la condition de mesure 45°/as 25°.

**2.** Procédé selon la revendication 1, **caractérisé en ce que** l'angle de teinte $h_{u'v'}$ des pigments d'interférence de rouge présente une séparation par rapport à l'angle de teinte $h_{u'v'}$ des pigments d'interférence de vert dans la plage de 110 à 130 degrés d'angle (deg).

**3.** Procédé selon la revendication 1 ou 2, **caractérisé en ce que** les pigments d'interférence de bleu présentent un angle de teinte $h_{u'v'}$ dans le système d'espace chromatique CIELUV dans la plage de 210° à 280°, déterminé dans un revêtement complet "toutes zones" séparé comprenant l'encre d'impression bleue sur un substrat noir sous la condition de mesure 45°/as 25°, dans lequel la séparation de l'angle de teinte $h_{u'v'}$ des pigments d'interférence de vert par rapport à l'angle de teinte $h_{u'v'}$ des pigments d'interférence de bleu et la séparation de l'angle de teinte $h_{u'v'}$ des pigments d'interférence de bleu par rapport à l'angle de teinte $h_{u'v'}$ des pigments d'interférence de rouge sont dans chaque cas dans la plage de 90 à 160 degrés d'angle (deg).

**4.** Procédé selon une ou plusieurs des revendications 1 à 3, **caractérisé en ce que** les pigments d'interférence de rouge, de bleu et de vert sont chacun constitués par des supports sous forme de flocons incolores transparents qui ont été revêtus d'une ou de plusieurs couches de matériaux incolores transparents.

**5.** Procédé selon une ou plusieurs des revendications 1 à 4, **caractérisé en ce que** les pigments d'interférence de rouge, de bleu et de vert présentent une taille de particules dans la plage de 5 à 45 $\mu$m et une valeur $d_{90}$ pondérée en nombre < 40 $\mu$m, tel que déterminé par évaluation individuelle de plus de 1 000 particules de pigment sous un microscope optique avec analyse d'image automatisée.

**6.** Procédé selon une ou plusieurs des revendications 1 à 5, **caractérisé en ce que** les trois encres d'impression sont appliquées sur le substrat selon la séquence rouge-vert-bleu.

**7.** Procédé selon une ou plusieurs des revendications 1 à 6, **caractérisé en ce que**, en plus des trois encres d'impression couleur, une encre d'impression est appliquée, laquelle a été pigmentée avec des pigments d'interférence et ne comprend pas d'autres pigments de coloration ou colorants.

**8.** Procédé selon une ou plusieurs des revendications 1 à 7, **caractérisé en ce que** le substrat sur lequel les trois encres d'impression couleur sont appliquées est un papier, un carton, un papier peint, un film en matière plastique, un corps en matière plastique, un film métallique, un corps métallique, un textile, du verre, du bois ou un matériau composite qui comprend au moins l'un desdits matériaux.

**9.** Procédé selon la revendication 8, **caractérisé en ce que** le substrat comporte une surface noire ou le substrat comporte une surface en couleur qui présente une valeur L* (CIELUV) dans la plage de 0 à 20.

**10.** Procédé selon une ou plusieurs des revendications 1 à 9, **caractérisé en ce qu'**il s'agit d'un procédé d'impression planographique, d'un procédé d'impression par gravure, d'un procédé d'impression en relief, d'un procédé d'impression par sérigraphie ou d'un procédé d'impression numérique.

**11.** Procédé selon une ou plusieurs des revendications 1 à 10, **caractérisé en ce que** chacune des encres d'impression est appliquée selon une épaisseur en couche(s) sèche(s) dans la plage de 0,2 à 250 $\mu$m.

**12.** Produit d'impression produit au moyen d'un procédé selon une ou plusieurs des revendications 1 à 11.

**13.** Utilisation d'un produit d'impression selon la revendication 12 dans des produits décoratifs ou artistiques.

Figur 1:

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 20060082844 A1
- DE 102005037095 A1
- US 2006082844 A1
- EP 1985458 A1

### In der Beschreibung aufgeführte Nicht-Patentliteratur

- **ARMANNI et al.** Producing three-Color Effects from Interference Pigments. *Plastics Engineering, Society of Plastics Engineering, Inc., US,* 01. Dezember 1994, vol. 50 (1 2), 31-33
- **RICHTER, M.** *Einführung in die Farbmetrik,* 1981, vol. 2, 118-122
- **WYSZECKI G ; STILES W.S.** Color Science, Concepts and methods, Quantitative Data and Formulae. Wiley, 2000, 158-169
- **T. ALLEN.** Powder sampling and Particle size determination. Elsevier, 2003